# EUROPEAN PATENT SPECIFICATION

(11) **EP 3 492 283 B1**
(45) Date of publication and mention of the grant of the patent: **07.10.2020**
(21) Application number: 18207946.7
(22) Date of filing: 23.11.2018
(51) Int. Cl.: B60C 11/04, B60C 11/12, B60C 11/13, B60C 11/03

(54) **TIRE TREAD COMPRISING A STABILIZER STRUCTURE**
REIFENLAUFFLÄCHE MIT EINER STABILISATORSTRUKTUR
BANDE DE ROULEMENT DE PNEUMATIQUE COMPRENANT UNE STRUCTURE DE STABILISATEUR

(30) Priority: 01.12.2017 US 201715828541
(43) Date of publication of application: 05.06.2019
(73) Proprietor: The Goodyear Tire & Rubber Company, Akron, OH 44316 (US)
(72) Inventor: JONES, Ashley Amanda, Akron, OH 44310 (US); GUILFORD, John Stephen, Seville, OH 44273 (US); BECKER, Derek John, Munroe Falls, OH 44262 (US)
(74) Representative: Kutsch, Bernd

(56) References cited:
- EP-A2- 0 841 199
- WO-A1-2017/090332
- JP-A- 2001 187 517
- JP-A- 2002 029 221
- US-A1- 2009 301 622

## Description

### Field of Invention

The present invention relates to a tread for a tire and more specifically to a tread for a pneumatic tire such as a truck tire.

### Background of the Invention

A construction is adopted in conventional pneumatic tires in which, when a cross-section is viewed from a tire meridian direction, a contact patch of a shoulder rib arches and forms a convex on an inner side of a tire radial direction. Due to this construction, contact pressure of the tire is distributed evenly over a center region and a shoulder region of a tread portion and uneven wear of the tire may be suppressed.

WO-A-2017/090332 describes a tire tread in accordance with the preamble of claim 1.

JP-A-2002-029221 describes a tire and a tire tread comprising sinusoidal shaped circumferential grooves. These grooves, in cross-section, have the shape of a W.

US-A-2009/0301622 describes a tire tread having a plurality of circumferential grooves with stone bumpers projecting from the sidewall of these grooves. Furthermore, each bumper has an undercut defining an arch-shaped bottom surface that is based from and opposes the bottom surface of the groove such that the ends of the bumpers are flexible. In this way, a channel is created at the bottom of the circumferential grooves.

EP-A-0 841 199 describes a tire having a tread having relatively wide and deep circumferential grooves close to the shoulder area of the tire and relatively narrow and less deep circumferential grooves in the central area of the tire. These relatively narrow central grooves are provided in the bottom with a circumferential sipe.

### Summary of the Invention

The invention relates to a tread in accordance with claim 1 and to a tire in accordance with claim 15.

Dependent claims refer to preferred embodiments of the invention.

A tread for a tire in accordance with one embodiment of the present invention includes a first circumferential main groove, a second circumferential main groove, a third circumferential main groove, and a fourth circumferential main groove. The fourth main groove has a stabilizing structure for increasing tread stiffness. The stabilizing structure has a circumferentially extending wavy subgroove in a radially innermost bottom of the fourth circumferential main groove.

According to a preferred aspect of the tread, the subgroove has a curved, cylindrical radially innermost surface for mitigating cracking and increasing axial flexibility of the stabilizing structures.

According to still another preferred aspect of the tread, an axial width of the subgroove shrinks to 0.0 mm under a predetermined operating condition.

According to yet another preferred aspect of the tread, the subgroove has a first sidewall and a second sidewall interconnected by the curved, cylindrical radially innermost surface of the subgroove.

According to still another preferred aspect of the tread, the first sidewall abuts the second sidewall under the predetermined operating condition.

According to yet another preferred aspect of the tread, relative motion between the first sidewall and the second sidewall is prevented by a wavy configuration of the first sidewall and a corresponding wavy configuration of the second sidewall.

Also, a method is provided for stiffening a tire tread. In accordance with one embodiment of the present invention, the method comprises the steps of: extending a first circumferential main groove across the tire tread; extending a second circumferential main groove across the tire tread; circumferentially extending a wavy subgroove across a radially innermost cylindrical bottom surface of the first main groove; and curving a radially innermost surface of the subgroove. The radially innermost surface of the subgroove being radially inside the radially innermost cylindrical bottom surface of the first main groove. sidewall under the predetermined operating condition.

### Definitions

"Axial" and "axially" are used herein to refer to lines or directions that are parallel to the axis of rotation of the tire.

"Circumferential" means lines or directions extending along the perimeter of the surface of the annular tire parallel to the Equatorial Plane (EP) and perpendicular to the axial direction; it can also refer to the direction of the sets of adjacent circular curves whose radii define the axial curvature of the tread, as viewed in cross section.

"Groove" means an elongated void area in a tread that may extend circumferentially or laterally about the tread in a straight, curved, or zigzag manner. Circumferentially and laterally extending grooves sometimes have common portions.

The "groove width" may be the tread surface occupied by a groove or groove portion divided by the length of such groove or groove portion; thus, the groove width may be its average width over its length. Grooves may be of varying depths in a tire. The depth of a groove may vary around the circumference of the tread, or the depth of one groove may be constant but vary from the depth of another groove in the tire. If such narrow or wide grooves are of substantially reduced depth as compared to wide circumferential grooves, which they interconnect, they may be regarded as forming "tie bars" tending to maintain a rib-like character in the tread region involved.

"Radial" and "radially" are used to mean directions radially toward or away from the axis of rotation of the tire.

"Rib" means a circumferentially extending strip of rubber on the tread which is defined by at least one, preferably circumferential groove and either a second such groove or a lateral edge. The strip may be laterally undivided by full-depth grooves.

"Sipe" or "incision" means small slots molded into the tread elements of the tire that subdivide the tread surface and improve traction; sipes may be designed to close when within the contact patch or footprint.

"Tread" means a molded rubber component which, when bonded to a tire casing, includes that portion of the tire that comes into contact with the road when the tire is normally inflated and under normal load.

"Tread element" or "traction element" means a rib or a block element.

"Tread width" means the arc length of the tread surface in a plane including the axis of rotation of the tire.

### Brief Description of the Drawings

The present invention will be better understood through reference to the following description and the appended drawings, in which:
FIG. 1 is a schematic perspective view of a tire in accordance with the present invention.
FIG. 2 is a schematic orthogonal view of the tread of the tire of FIG. 1.
FIG. 3 is a schematic detail view of the tread of FIG. 2.
FIG. 4 is a schematic section view taken along the line "4-4" in FIG. 2.
FIG. 5 is a schematic detail drawing of a shoulder area of FIG. 4.

### Detailed Description of Example Embodiments of the Invention

Referring now in more detail to the drawings, the present invention will below be described in more detail.

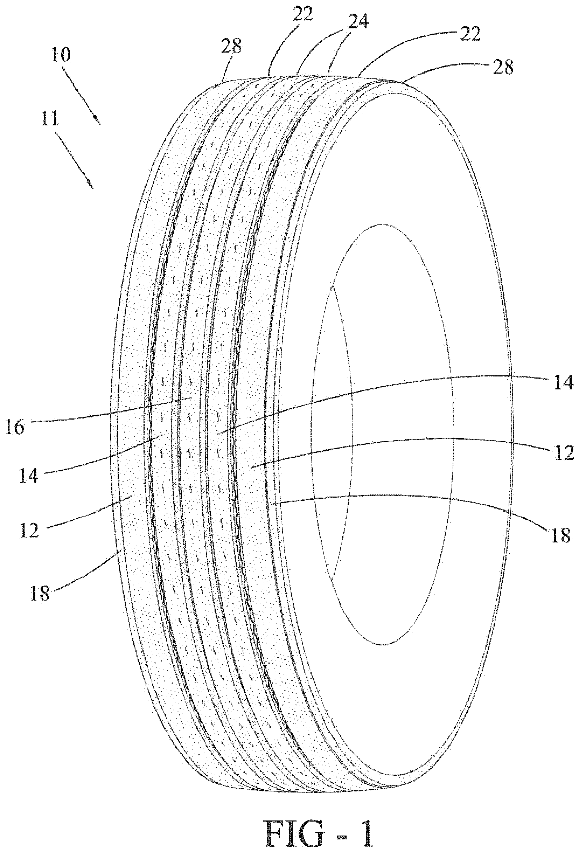

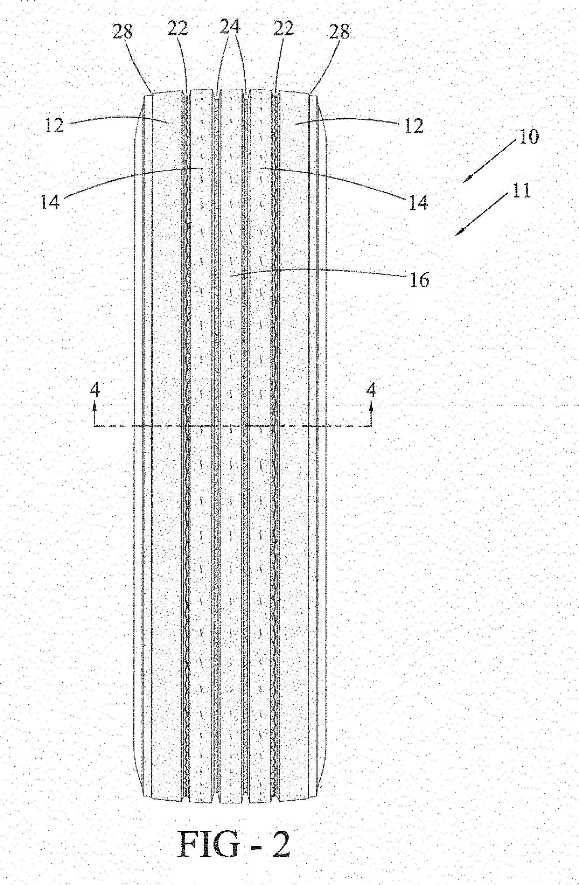

A pneumatic tire 10, which could also be a non-pneumatic tire, is illustrated in FIGS. 1-5 and has a tread 11 with relatively narrow circumferential shoulder ribs 18 defined by circumferential shoulder grooves 28 at the lateral edges of the main tread portion. The axial width of the circumferential shoulder ribs 18 is each preferably in a range of from 2% to 10%, more preferably 3% to 7% of overall the axial width of the tread 11. The narrow circumferential shoulder ribs 18 are preferably sacrificial ribs. Preferably, the tire 10 is a truck tire.

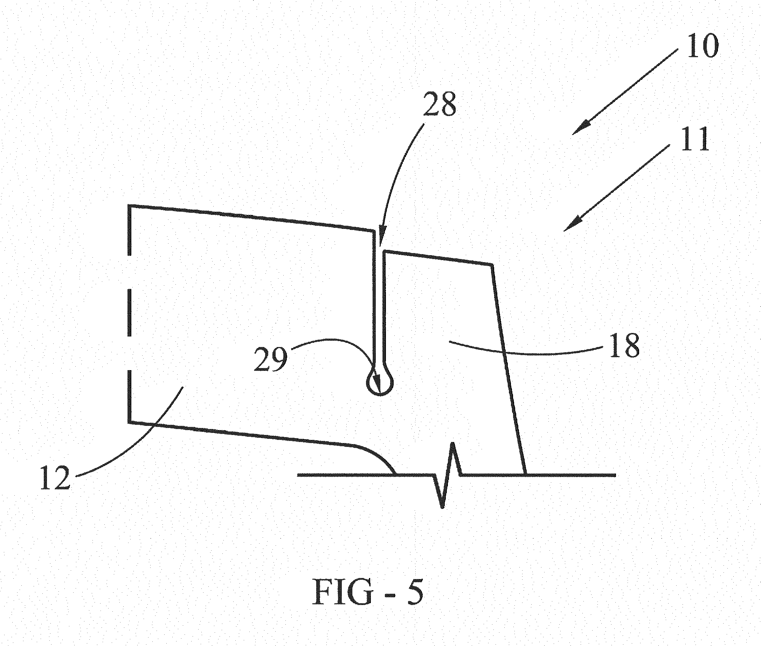

The shoulder grooves 28 have curved, in cross-section preferably cylindrical or hemispherical radially innermost surfaces 29 to mitigate cracking (see FIG. 5). In cross-section, the shoulder grooves 28 overall preferably have a key-hole shape with a widened, basically rain drop shaped or circular radial inner portion. The width of the shoulder grooves 28 at their radially outermost portion is preferably in a range of from 0.7 mm to 3 mm, more preferably 1-2 mm.

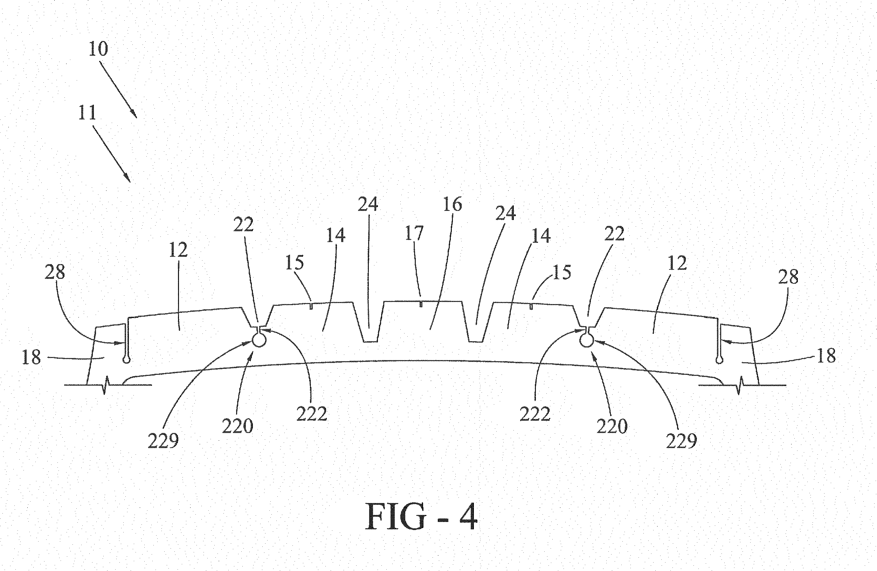

The narrow shoulder ribs 18 are preferably radially recessed from the main tread portion as shown in Fig. 4. This recess is preferably in a range from 0.5 to 2 mm. Accordingly, there is a respective step in the tread 11 at the shoulder groove 28 when moving axially from the shoulder rib 18 towards the equatorial plane of the tire 10.

The main tread portion is defined by a pair of intermediate circumferential first ribs 12, a pair of intermediate circumferential second ribs 14, and one or more center circumferential third ribs 16.

The intermediate circumferential first ribs 12 are each defined by the respective shoulder groove 28 and a respective first circumferential groove 22.

The intermediate circumferential second ribs 14 are each defined by the respective first circumferential groove 22 and a respective second circumferential groove 24.

The center circumferential third rib 16 is defined by the second circumferential grooves 24.

The first circumferential groove 22 serve as stabilizing circumferential grooves 22.

The two second or central circumferential grooves 24 each have a trapezoidal cross-section with slanted walls and a flat bottom (FIG. 4). The slanted walls preferably make an angle with the equatorial plane of the tire 10 in a range of from 10 to 30 degrees, more preferably 15 to 25 degrees.

The radial depth of the second or central circumferential grooves 24 is preferably in a range of from 12 to 20 mm and/or in a range of from 80% to 100% or from 90% to 100% of the non-skid depth of the tread 11.

The intermediate circumferential second ribs 14 and the center intermediate circumferential third rib 16 preferably each have wavy blind sipes 15, 17, respectively, for improving performance of the tread 11.

The two first circumferential grooves 22 also have a trapezoidal cross-section with slanted walls and a flat bottom, similar to the two central circumferential grooves 24. The slanted walls preferably again make an angle with the equatorial plane of the tire 10 in a range of from 10 to 30 degrees, more preferably 15 to 25 degrees.

As shown in FIG. 4, the radial depth of each of the two first circumferential grooves 22 is shallower or less than the depth of the central circumferential grooves 24.

The radial depth of each of the two first circumferential grooves 22 is preferably 50% or about 50% of the central groove depths (FIG. 4). In another embodiment, the radial depth of each of the two first circumferential grooves 22 is in a range of from 40% to 70% or 40% to 60% of the central groove depths.

At the flat bottom of each of the two first circumferential grooves 22 is a stabilizing structure 220.

The stabilizing structures 220 are defined circumferentially extending wavy or sinusoidal subgrooves 222 in the bottoms of the grooves 22. The wavelength of the wavy or sinusoidal subgrooves 222 in the circumferential direction is preferably in a range of from 8 to 50 mm, more preferably 10 to 40 mm.

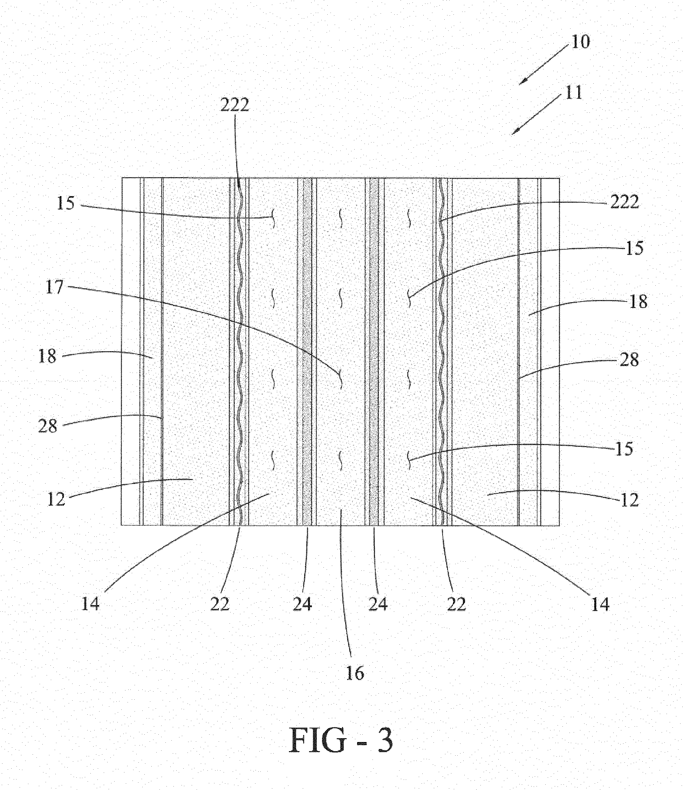

As shown in FIG. 3, both the axial width of the subgrooves 222 and the axial width of the wave or sinusoidal pattern of the subgrooves 222, i.e. twice their amplitude, is preferably less than the axial width of the bottoms of the circumferential grooves 22.

Preferably, the axial width of the subgrooves 222 is in a range of from 5 to 25%, more preferably 10 to 20%, of the axial width of the bottoms of the circumferential grooves 22.

Preferably, the axial width of the wave or sinusoidal pattern of the subgrooves 222 is in a range of from 25 to 80%, more preferably 30 to 50%, of the axial width of the bottoms of the circumferential grooves 22.

The subgrooves 222 preferably extend into curved, in cross-section preferably cylindrical or hemispherical radially innermost surfaces 229 to mitigate cracking and to increase axial flexibility of the stabilizing structures 222 (FIG. 5). Hence, the subgrooves 222 together with the radially innermost surfaces 229 overall preferably have a key-hole shape with a widened, basically rain drop shaped or round radial inner portion. The axial width of the radially innermost surfaces 229 is preferably in a range of from 70 to 110%, more preferably 90 to 100%, of the axial width of the bottoms of the circumferential grooves 22.

The total radial depth of the two first circumferential grooves 22 including the radial depth of the subgrooves 222 and the innermost structures 229 is preferably in a range of from 90% to 110%, more preferably 100% or about 100% of the radial depth of the center or second circumferential grooves 24.

When an axially inward load is placed on the tread 11, such as while the vehicle is cornering, the axial width of the subgrooves 222 may shrink to as little as 0.0 mm (e.g., touching). Because of the wavy pattern of the subgrooves 222, the walls of the subgrooves may interlock thereby preventing relative circumferential movement between the walls of the subgrooves 222. This may provide an increase in stiffness of the tread 11 while cornering, without requiring increased overall stiffness of the tread during straight line movement of the vehicle.

During normal running of the vehicle, the relatively narrow sacrificial shoulder ribs 18 may remain recessed to maintain a sharp edge at the axially or laterally outer edges of first ribs 12. The narrow shoulder ribs 18 may deflect into the first ribs 12 during lateral maneuvers of the vehicle in order to laterally support the first ribs 12. These narrow shoulder ribs 18 may hence have a coupling effect with the first ribs 12 to maintain a flat lateral or transverse profile of the footprint of the tread 11.

The narrow shoulder ribs 18 preferably wear at essentially the same rate as the main tread portion thereby maintaining a stable radial recess or offset distance from the main tread profile (FIG. 5).

## Claims

1. A tread for a tire (10), the tread (11) comprising a main tread portion defined by a pair of intermediate circumferential first ribs (12), a pair of intermediate circumferential second ribs (14), and a center circumferential third rib (16), wherein the intermediate circumferential first ribs (12) are each defined by a respective shoulder groove (28) and a respective first circumferential groove (22), the intermediate circumferential second ribs (14) are each defined by the respective first circumferential groove (22) and a respective second circumferential groove (24), and the center circumferential third rib (16) is defined by said second circumferential grooves (24), wherein the first circumferential grooves (22) each have a trapezoidal cross-section with slanted walls and a flat bottom and wherein the second circumferential grooves (24) each have a trapezoidal cross-section with slanted walls and a flat bottom, and wherein the first circumferential grooves (22) each comprise a stabilizing structure (220) comprising a circumferentially extending subgroove (222) in the radially innermost flat bottom of the respective first circumferential groove (22), **characterized in that** the subgroove (222) is a sinusoidal subgroove (222) and **in that** the radial depth of the first circumferential grooves (22) is shallower or less than the depth of the second circumferential grooves (24).

2. The tread as set forth in claim 1 wherein the subgroove (222) has a in cross-section curved, cylindrical or hemispherical radially innermost surface (229).

3. The tread as set forth in claim 1 or 2 wherein an axial width of the subgroove (222) is such that it shrinks to 0.0 mm under predetermined operating conditions of the tire (10).

4. The tread as set forth in at least one of the previous claims wherein the subgroove (222) has a first sidewall and a second sidewall interconnected by the curved innermost surface (229) of the subgroove (222).

5. The tread as set forth in claim 4 wherein the first sidewall abuts the second sidewall under predetermined operating conditions of the tire.

6. The tread as set forth in claim 5 wherein relative motion between the first sidewall and the second sidewall is prevented or reduced by a wavy configuration of the first sidewall and a corresponding wavy configuration of the second sidewall.

7. The tread of claim 1 wherein the slanted walls of the first circumferential grooves (22) make an angle with the equatorial plane of the tire (10) in a range of from 10 to 30 degrees.

8. The tread of claim 1 wherein the slanted walls of the second circumferential grooves (24) make an angle with the equatorial plane of the tire (10) in a range of from 10 to 30 degrees.

9. The tread of claim 1 wherein the axial width of the subgrooves (222) is in a range of from 5 to 25% of the axial width of the flat bottoms of the circumferential grooves (22).

10. The tread of claim 1 wherein the radial depth of the second circumferential grooves (24) is in a range of from 12 to 20 mm.

11. The tread of claim 1 wherein the radial depth of the second circumferential grooves (24) is in a range of from 80% to 100% of the non-skid depth of the tread (11).

12. The tread of claim 1 wherein the radial depth of each of the two first circumferential grooves (22) is in a range of from 40% to 70% or 40% to 60% of the radial depths of the second circumferential grooves (24).

13. The tread of claim 1 wherein the wavelength of the sinusoidal subgrooves (222) in the circumferential direction is in a range of from 8 to 50 mm.

14. The tread of claim 1 wherein the intermediate circumferential second ribs (14) and the center circumferential third rib (16) each have wavy blind sipes (15, 17).

15. A tire comprising the tread (11) in accordance with at least one of the previous claims.

## Patentansprüche

1. Lauffläche für einen Reifen (10), wobei die Lauffläche (11) einen Hauptlaufflächenabschnitt umfasst, der durch ein Paar erster Zwischenumfangsrippen (12), ein Paar zweiter Zwischenumfangsrippen (14), und eine dritte Mittelumfangsrippe (16) definiert ist, wobei die ersten Zwischenumfangsrippen (12) jeweils durch eine jeweilige Schulterrille (28) und eine jeweilige erste Umfangsrille (22) definiert sind, wobei die zweiten Zwischenumfangsrippen (14) jeweils durch die jeweilige erste Umfangsrille (22) und eine jeweilige zweite Umfangsrille (24) definiert sind, und die dritte Mittelumfangsrippe (16) durch die zweiten Umfangsrillen (24) definiert ist, wobei die ersten Umfangsrillen (22) jeweils einen trapezförmigen Querschnitt mit schrägen Wänden und eine flache Unterseite aufweisen und wobei die zweiten Umfangsrillen (24) jeweils einen trapezförmigen Querschnitt mit schrägen Wänden und eine flache Unterseite aufweisen, und wobei die ersten Umfangsrillen (22) jeweils eine Stabilisierungsstruktur (220) umfassen, die eine sich in Umfangsrichtung erstreckende Teilrille (222) in der radial innersten flachen Unterseite der jeweiligen ersten Umfangsrille (22) umfasst, **dadurch gekennzeichnet, dass** die Teilrille (222) eine sinusförmige Teilrille (222) ist und dadurch, dass die radiale Tiefe der ersten Umfangsrillen (22) flacher oder kleiner als die Tiefe der zweiten Umfangsrillen (24) ist.

2. Lauffläche nach Anspruch 1, wobei die Teilrille (222) eine im Querschnitt gekrümmte, zylindrische oder halbkugelförmige radial innerste Oberfläche (229) aufweist.

3. Lauffläche nach Anspruch 1 oder 2, wobei eine axiale Breite der Teilrille (222) derart ist, dass sie unter zuvor bestimmten Betriebsbedingungen des Reifens (10) auf 0,0 mm schrumpft.

4. Lauffläche nach wenigstens einem der vorhergehenden Ansprüche, wobei die Teilrille (222) eine erste Seitenwand und eine zweite Seitenwand aufweist, die durch die gekrümmte innerste Oberfläche (229) der Teilrille (222) miteinander verbunden sind.

5. Lauffläche nach Anspruch 4, wobei die erste Seitenwand unter zuvor bestimmten Betriebsbedingungen des Reifens an der zweiten Seitenwand anliegt.

6. Lauffläche nach Anspruch 5, wobei eine Relativbewegung zwischen der ersten Seitenwand und der zweiten Seitenwand durch eine Wellenkonfiguration der ersten Seitenwand und eine entsprechende Wellenkonfiguration der zweiten Seitenwand verhindert oder verringert wird.

7. Lauffläche nach Anspruch 1, wobei die schrägen Wände der ersten Umfangsrillen (22) einen Winkel mit der Äquatorialebene des Reifens (10) in einem Bereich von 10 bis 30 Grad bilden.

8. Lauffläche nach Anspruch 1, wobei die schrägen Wände der zweiten Umfangsrillen (24) einen Winkel mit der Äquatorialebene des Reifens (10) in einem Bereich von 10 bis 30 Grad bilden.

9. Lauffläche nach Anspruch 1, wobei die axiale Breite der Teilrillen (222) in einem Bereich von 5 bis 25 % der axialen Breite der flachen Unterseiten der Umfangsrillen (22) liegt.

10. Lauffläche nach Anspruch 1, wobei die radiale Tiefe der zweiten Umfangsrillen (24) in einem Bereich von 12 bis 20 mm liegt.

11. Lauffläche nach Anspruch 1, wobei die radiale Tiefe der zweiten Umfangsrillen (24) in einem Bereich von 80 % bis 100 % der rutschfesten Tiefe der Lauffläche (11) liegt.

12. Lauffläche nach Anspruch 1, wobei die radiale Tiefe jeder der beiden ersten Umfangsrillen (22) in einem Bereich von 40 % bis 70 % oder 40 % bis 60 % der radialen Tiefen der zweiten Umfangsrillen (24) liegt.

13. Lauffläche nach Anspruch 1, wobei die Wellenlänge der sinusförmigen Teilrillen (222) in der Umfangsrichtung in einem Bereich von 8 bis 50 mm liegt.

14. Lauffläche nach Anspruch 1, wobei die Zwischenumfangsrippen (14) und die dritte Mittelumfangsrippe (16) jeweils gewellte blinde Lamellen (15, 17) aufweisen.

15. Reifen, der die Lauffläche (11) nach wenigstens einem der vorhergehenden Ansprüche umfasst.

## Revendications

1. Bande de roulement destinée à un bandage pneumatique (10), la bande de roulement (11) comprenant une portion principale de la bande de roulement qui est définie par : une paire de premières nervures intermédiaires circonférentielles (12); par une paire de deuxièmes nervures intermédiaires circonférentielles (14) ; et par une troisième nervure centrale circonférentielle (16); dans laquelle les premières nervures intermédiaires circonférentielles (12) sont chacune définies par une rainure d'épaulement respective (28) et par une première rainure circonférentielle respective (22), les deuxièmes nervures intermédiaires circonférentielles (14) sont chacune définies par la première rainure circonférentielle respective (22) et par une deuxième rainure circonférentielle respective (24), et la troisième nervure centrale circonférentielle (16) est définie par lesdites deuxièmes rainures circonférentielles (24) ; dans laquelle les premières rainures circonférentielles (22) possèdent chacune une section transversale de forme trapézoïdale qui comprend des parois inclinées et une base de forme plate ; et dans laquelle les deuxièmes rainures circonférentielles (24) possèdent chacune une section transversale de forme trapézoïdale qui comprend des parois inclinées et une base de forme plate ; et dans laquelle les premières rainures circonférentielles (22) comprennent chacune une structure de stabilisation (220) qui comprend une rainure secondaire (222) qui s'étend dans la direction circonférentielle dans la base de forme plate la plus interne dans la direction radiale de la première rainure circonférentielle respective (22) ; **caractérisée en ce que** la rainure secondaire (222) représente une rainure secondaire (222) de forme sinusoïdale ; et **en ce que** la profondeur radiale des premières rainures circonférentielles (22) est moins profonde ou représente une profondeur qui est inférieure à la profondeur des deuxièmes rainures circonférentielles (24).

2. Bande de roulement telle qu'indiquée dans la revendication 1, dans laquelle la rainure secondaire (222) possède une surface la plus interne dans la direction radiale (229) qui possède une configuration de forme courbe, de forme cylindrique ou de forme hémisphérique en section transversale.

3. Bande de roulement telle qu'indiquée dans la revendication 1 ou 2, dans laquelle une largeur axiale de la rainure secondaire (222) est telle qu'elle se rétrécit jusqu'à prendre une valeur de 0,0 mm dans des conditions de travail prédéterminées du bandage pneumatique (10).

4. Bande de roulement telle qu'indiquée dans au moins une des revendications précédentes, dans laquelle la rainure secondaire (222) possède un premier flanc et un deuxième flanc qui sont reliés l'un à l'autre par l'intermédiaire de la surface courbe la plus interne (229) de la rainure secondaire (222).

5. Bande de roulement telle qu'indiquée dans la revendication 4, dans laquelle le premier flanc vient buter contre le deuxième flanc dans des conditions de travail prédéterminées du bandage pneumatique.

6. Bande de roulement telle qu'indiquée dans la revendication 5, dans laquelle on empêche ou on réduit un mouvement relatif entre le premier flanc et le deuxième flanc par l'intermédiaire d'une configuration ondulée du premier flanc et d'une configuration ondulée correspondante du deuxième flanc.

7. Bande de roulement telle qu'indiquée dans la revendication 1, dans laquelle les parois inclinées des premières rainures circonférentielles (22) forment un angle avec le plan équatorial du bandage pneumatique (10) qui se situe dans une plage de 10 à 30 degrés.

8. Bande de roulement telle qu'indiquée dans la revendication 1, dans laquelle les parois inclinées des deuxièmes rainures circonférentielles (24) forment un angle avec le plan équatorial du bandage pneumatique (10) qui se situe dans une plage de 10 à 30 degrés.

9. Bande de roulement telle qu'indiquée dans la revendication 1, dans laquelle la largeur axiale des rainures secondaires (222) se situe dans une plage qui représente de 5 à 25 % de la largeur axiale des bases de forme plate des rainures circonférentielles (22).

10. Bande de roulement telle qu'indiquée dans la revendication 1, dans laquelle la profondeur radiale des deuxièmes rainures circonférentielles (24) se situe dans une plage de 12 à 20 mm.

11. Bande de roulement telle qu'indiquée dans la revendication 1, dans laquelle la profondeur radiale des deuxièmes rainures circonférentielles (24) se situe dans une plage qui représente de 80 % à 100 % de la profondeur d'usure de la bande de roulement (11).

12. Bande de roulement telle qu'indiquée dans la revendication 1, dans laquelle la profondeur radiale de chacune des deux premières rainures circonférentielles (22) se situe dans une plage qui représente de 40 % à 70 % ou de 40 % à 60 % des profondeurs radiales des deuxièmes rainures circonférentielles (24).

13. Bande de roulement telle qu'indiquée dans la revendication 1, dans laquelle la longueur d'onde des rainures secondaires (222) de forme sinusoïdale dans la direction circonférentielle se situe dans une plage de 8 à 50 mm.

14. Bande de roulement telle qu'indiquée dans la revendication 1, dans laquelle les deuxièmes nervures intermédiaires circonférentielles (14) et la troisième nervure centrale circonférentielle (16) possèdent chacune des lamelles ondulées borgnes (15, 17).

15. Bandage pneumatique comprenant la bande de roulement (11) selon au moins une des revendications précédentes.
